# EUROPÄISCHE PATENTSCHRIFT

(11) **EP 0 668 306 B1**
(45) Veröffentlichungstag und Bekanntmachung des Hinweises auf die Patenterteilung: **01.07.1998**
(21) Anmeldenummer: 95101557.7
(22) Anmeldetag: 06.02.1995
(51) Int. Cl.: C08G 18/66

(54) **Verfahren zur Isolierung von Rohren mit Polyurethan-Hartschaumstoffen nach dem Rotationsgussverfahren**
Pipe insulation process using rigid polyurethane foam in rotational moulding
Procédé pour l'isolation de tuyaux avec des mousses de polyuréthane rigides par moulage de rotation

(30) Priorität: 17.02.1994 DE 4405061
(43) Veröffentlichungstag der Anmeldung: 23.08.1995
(73) Patentinhaber: BAYER AG, 51368 Leverkusen (DE)
(72) Erfinder: Eisen, Norbert, Dr., D-50937 Köln (DE); Godthardt, Lutz-Peter, D-51371 Leverkusen (DE); Haas, Peter, Dr., D-42781 Haan (DE)

(56) Entgegenhaltungen:
- EP-A- 0 121 850
- EP-A- 0 236 895
- FR-A- 2 121 556

## Beschreibung

Die Isolierung von Rohren mit PUR-Hartschaumstoffen nach der Technik des Rotationsverfahrens ist z.B. aus der DE-OS 41 18 362 bekannt. Wie aber die praktische Anwendung zeigt, ist die derzeitige Rezeptur zur Herstellung der Hartschaumstoffe noch stark verbesserungsbedürftig. Als besonders problematisch erweist sich in der Praxis der Verarbeitung der Auftrag des Reaktionskomponentengemisches. Im Zusammenhang mit der Rotationsgußverarbeitung sind an die Reaktionsmischungen extreme Anforderungen zu stellen. Einerseits muß der reagierende Schaumstoff am rotierenden Rohr noch genügend aufsteigen und als Einzelstrang verlaufen, andererseits darf er schon anfangs nicht wegen ungenügender Vernetzung von diesem Rohr bzw. den Auftragdüsen abfließen. Weiter erschwerend kommt hinzu, daß eine nahezu wellenfreie Oberfläche des dimensionsstabilen Schaumstoffs resultieren soll, auf welche oft eine thermoplastische Deckschicht aufgetragen wird. Bei welliger Oberfläche fließt diese nämlich in die Wellentäler ab, wodurch eine dünnere Deckschicht auf dem Wellenberg resultiert. Dies äußert sich dann nicht nur in einer optisch uneinheitlichen Deckschicht; hierdurch leidet auch die mechanische Beständigkeit und das Sperrschichtverhalten gegenüber Diffusion.

Als weitere wichtige Eigenschaft für die technische Nutzung hat sich die Haftung des Schaumstoffs am zu isolierenden Rohr ergeben. Dies ist besonders kritisch, da es sich um einen nicht verdichteten Schaumstoff handelt. Weiterhin sollen die verwendeten Treibmittelkomponenten neueren ökologischen Erkenntnissen entsprechen und FCKW-frei sein.

Die EP-A-121 850 beschreibt ein Verfahren zur Herstellung von zelligen Polyurethanen unter Verwendung eines flüssigen Amin-Kohlendioxid-Addukts, welches ein bei 20°C flüssiges Addukt von Kohlendioxid mit einem mindestens eine primäre, sekundäre oder tertiäre Hydroxylgruppe aufweisenden, bei 20°C festen oder flüssigem Amin mit mindestens einer Aminogruppe ist.

Die EP-A-236 895 beschreibt ebenfalls ein Verfahren zur Herstellung zelliger Polyurethane, wobei ein spezielles Alkanolamin-Kohlendioxid-Addukt und/oder Alkanolamin/Kohlendioxid/Wasser-Addukt in Kombination mit einem tert.-Amin-Katalysator und gegebenenfalls Monofluortrichlormethan als homogene Mischung verwendet wird.

Mit dem in der DE-OS 41 18 362 beschriebenen Verfahren zum Rotationsgießen ist eine ohne Probleme über längere Zeit laufende Verarbeitung noch nicht gegeben. Das zum Polyurethan-Hartschaum führende Reaktionsgemisch zeigt z.B. nach kurzem Maschinenlauf von ca. 7 Minuten plötzlich keine Fließfähigkeit mehr, was ein Zusetzen der Austragsdüse zur Folge hat. Eine kontinuierliche Verarbeitung ist somit nicht möglich. Für eine technische Nutzung ist jedoch die fortlaufende und konstante Rotationsbeschichtung von Röhren beliebiger Länge und deren anschließende Beschichtung mit einem Thermoplastüberzug jedoch Voraussetzung.

Überraschend gelingt dies durch die erfindungsgemäße Verwendung von zwei unterschiedlichen Vernetzern als Reaktionspartner bei der Herstellung von PUR-Hartschaumstoffen für den Rotationsgießprozeß, wobei zudem gute Zug-/Schereigenschaften resultieren.

Gegenstand der Erfindung ist ein Verfahren zur Isolierung von Rohren durch Auftragen eines Polyurethan-Hartschaumstoffs als Isolierschicht und gegebenenfalls einer äußeren Deckschicht nach dem Rotationsgießverfahren, wobei der Polyurethan-Hartschaumstoff durch Umsetzung eines
a) aromatischen Polyisocyanats mit
b) einer im Mittel mindestens 3 gegenüber Isocyanaten reaktive Wasserstoffatome aufweisenden organischen Verbindung von Molekulargewicht 92 bis 1.000 und
c) eines aliphatischen, cycloaliphatischen oder aromatischen Polyamins und/oder Polyimins vom Molekulargewicht 32 bis 1.000 als Vernetzer in Gegenwart
d) eines Treibmittels sowie gegebenenfalls in Gegenwart von
e) an sich bekannten Hilfs- und Zusatzstoffen
erhältlich ist, dadurch gekennzeichnet, daß
f) Verbindungen vom Molekulargewicht 32 bis 1000 der allgemeinen Formel 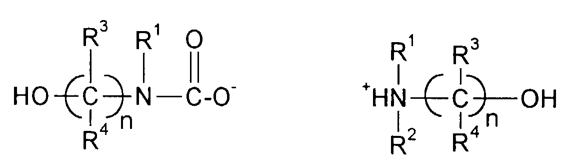
in der
- n: eine ganze Zahl zwischen 2 und 9, bevorzugt 2 und 3,
- R¹: Wasserstoff, einen C₁-C₉-Alkylrest oder einen 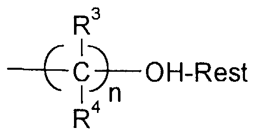
- R²: Wasserstoff
- R³ und R⁴: Wasserstoff oder Methyl
bedeuten,
als zusätzliche Vernetzer bei der Herstellung des Polyurethan-Hartschaumstoffs mitverwendet werden.

Erfindungsgemäß bevorzugt ist, daß
- als aromatisches Polyisocyanat ein Gemisch aus Diphenylmethandiisocyanaten und Polyphenyl-polyisocyanaten verwendet wird,
- als Vernetzer f) die Carbamate von Ethanolamin, Diethanolamin, Isopropanolamin, Propanolamin, N-Methylethanolamin, Diisopropanolamin verwendet werden,
- als Vernetzer c) solche mit 2 bis 10 primären Aminogruppen verwendet werden,
- als Vernetzer c) solche mit 1 bis 5 primären und 1 bis 10 sekundären Aminogruppen verwendet werden,
- der Vernetzer c) tertiäre Stickstoffatome und primäre und/oder sekundäre Aminogruppen aufweist.
- als Treibmittel d) C₃-C₆-Kohlenwasserstoffe verwendet werden,
- als Treibmittel d) Pentan und/oder Cyclopentan verwendet wird,
- als Treibmittel d) Kohlendioxid verwendet wird,
- als Vernetzer f) Verbindungen vom Molekulargewicht 32-500 verwendet werden,
- auf dem Polyurethan-Hartschaumstoff eine Thermoplastdeckschicht aufgebracht wird und
- es sich bei der Thermoplastdeckschicht um Polypropylen, Polyethylen, Polystyrol, Polybuten, Copolymere auf Basis Styrol/Acrylnitril/Acrylester oder Acrylnitril/Butadien/Styrol, um Polyamide, Polyester, Polyurethane oder um Polycarbonate handelt.

Für die Herstellung der Polyurethan-Hartschaumstoffe werden als Ausgangskomponenten eingesetzt:
a) Polyisocyanate, wie sie z.B. von W. Siefken in Justus Liebigs Annalen der Chemie, 562, Seiten 75 bis 136, beschrieben werden, beispielsweise solche der Formel

Q(NCO)ₙ

in der
- n =: 2-4, vorzugsweise 2 und 3, und
- Q: einen aromatischen Kohlenwasserstoffrest mit 6 bis 15, vorzugsweise 6 bis 13 C-Atomen,
bedeutet, z.B. solche Polyisocyanate, wie sie in der DE-OS 28 32 253, Seiten 10 bis 11, beschrieben werden.

Besonders bevorzugt werden in der Regel die technisch leicht zugänglichen Polyisocyanate, z.B. das 2,4- und 2,6-Toluylendiisocyanat sowie beliebige Gemische dieser Isomeren (TDI), Gemische aus Diphenylmethandiisocyanaten und Polyphenylpolymethylenpolyisocyanaten, wie sie durch Anilin-Formaldehyd-Kondensation und anschließende Phosgenierung hergestellt werden ("rohes MDI") und Carbodimidgruppen, Urethangruppen, Allophanatgruppen, Isocyanuratgruppen, Harnstoffgruppen oder Biuretgruppen aufweisende Polyisocyanate ("modifizierte Polyisocyanate").

Diese Polyisocyanate werden mit den Komponenten b), c) und f) umgesetzt.

Die Komponente b) umfaßt an sich bekannte, im Mittel mindestens drei aktive Wasserstoffatome aufweisende Verbindungen von Molekulargewicht 92 bis 1.000, z.B. Polyetherpolyole, die durch Anlagerung von Propylenoxid und/oder Ethylenoxid an Starter wie Sorbit, Ethylenglykol, Trimethylolpropan, Glycerin, Pentaerythrit und/oder Zucker hergestellt worden sind. Vorzugsweise haben diese eine OH-Zahl von 300-600. Auch die an sich bekannten Polyesterpolyole kommen erfindungsgemäß in Frage.

Die Komponente c) umfaßt ein aliphatisches, cycloaliphatisches oder aromatisches Polyamin und/oder Polyimin vom Molekulargewicht 32 bis 1.000 als Vernetzer,
α) bifunktionelle Amine und Imine: Ethylendiamin, Propylendiamin, Butylendiamin, Pentamethylendiamin, Hexamethylendiamin und deren höhere Homologe, 1.4-Diamincyclohexan, Isophorondiamin, Bis-(4-aminocyclohexyl)-methan, Piperazin, Bis-(2-aminoethyl)-piperazin, Bis-(3-aminopropyl)-piperazin, 2-Aminoethylpiperazin, 3-Aminopropylpiperazin, N,N'-Dimethylethylendiamin
β) höherfunktionelle Amine und Imine: Diethylentriamin, Triethylentetramin, Tetraethylenpentamin, Pentaethylenhexamin und weitere höhere Homologe dieser Reihe, Dipropylentriamin und höhere Homologe wie Tripropylentetramin, Tetrapropylenpentamin, Pentapropylenhexamin.

Diese Vernetzer werden in der Regel in Mengen von 0,1 bis 10, bevorzugt 1,0 bis 7,5 Gew.-Teilen, bezogen auf 100 Gew.-Teile der Komponente b), eingesetzt.

Als Treibmittel kommen neben Wasser, das bekanntlich durch Reaktion mit Isocyanaten CO₂ freisetzt, leichtflüchtige organische Substanzen in Frage, z.B. perhalogenierte und teilhalogenierte Kohlenwasserstoffe, die bei einem Druck von 1013 mbar innerhalb des Temperaturbereichs von -50°C bis +75°C, vorzugsweise von +10°C bis 50°C sieden, wie 1,1-Dichlor-1-fluorethan (R141b), Chlordifluormethan (R22), 1-Chlor-1,1-difluor-ethan (R142b), 1,1,1,2-Tetrafluorethan (R134a) sowie aliphatische oder cycloaliphatische C₃-C₆-Kohlenwasserstoffe z.B. Propan, Butan, n-Pentan, Isopentan, Cyclopentan und Cyclohexan.

Als zusätzlicher Vernetzer f) werden Verbindungen der oben genannten allgemeinen Formel eingesetzt, z.B. Carbamate von Aminoethanol, 3-Aminopropanol, Isopropanolamin, Diethanolamin, N-Methylethanolamin, Diisopropanolamin, 2-Hydroxycyclohexylamin, N-Cyclohexylethanolamin, 3-Hydroxybutylamin, 2-Amino-2-methylpropanol, N-(2-hydroxypropyl)-cyclohexylamin.

Natürlich können auch die hydroxyfunktionellen Oligoamine, Diamine und Monoamine als durch Kohlendioxid blockierte Vernetzer verwendet werden. Verfahrenstechnisch herausragend sind jedoch die oben angeführten Typen f).

Diese Vernetzer f) werden in der Regel in Mengen von 0,1 bis 15, bevorzugt 1,0 bis 10 Gew.-Teilen, bezogen auf 100 Gew.-Teile der Polyolkomponente b, verwendet.

Die Komponenten b), c), d) und f) bilden zusammen die sogenannte "Polyolkomponente", die mit der Polyisocyanatkomponente a) umgesetzt wird.

Als gegebenenfalls mitzuverwendende Hilfs- und Zusatzstoffe (Komponente c) kommen z.B. Emulgatoren und Schaumstabilisatoren in Frage. Als Emulgatoren sind solche auf Basis alkoxylierter Fettsäuren und höherer Alkohole bevorzugt.

Als Schaumstabilisatoren kommen vor allem Polyethersiloxane, speziell wasserunlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Wasserlösliche Schaumstabilisatoren sind z.B. in den US-PS 28 34 748, 29 17 480 und 36 29 308 beschrieben.

Erfindungsgemäß können auch die aus der Polyurethanchemie an sich bekannten Katalysatoren wie tert.-Amine und/oder metallorganische Verbindungen in der Polyolkomponente mitenthalten sein.

Auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide in der Polyolkomponente mitenthalten sein können.

Weitere Beispiele von gegebenenfalls mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl Hanser Verlag, München 1966, z.B. auf den Seiten 103 bis 113 bzw. in der Neuauflage von 1993 beschrieben.

Das erfindungsgemäße Verfahren erbringt nicht nur ein rotationsgerechtes Steigen und Fließen der PUR-Rohstoffmischung, sondern auch ein optimales Eigenschaftsbild bezüglich wichtiger Kriterien für diese Anwendung wie
- gute Haftung des nicht verdichteten Schaumstoffs am Rohr
- gute Zug-/Scherfestigkeit des Werkstoffverbundes
- Dimensionsstabilität des Schaumstoffs
- Wärmeleitzahl
Abschließend wird der Schaumstoff vielfach mit einer Thermoplastdeckschicht versehen.

Die Thermoplastdeckschicht kann auf der Basis eines Polyurethanelastomeren, von Polyolefinthermoplasten mit geeignetem Wärmestand wie Polyethylen, Polypropylen, Polybuten, Polyisobutylen, von Copolymerisaten auf der Basis Styrol/Acrylnitril/Acrylester sowie Acrylnitril/Butadien/Styrol, von Polyamiden oder Polyestern oder Polycarbonaten gewählt werden.

Der Auftrag der Polyurethan-Hartschaumschicht und einer äußeren Deckschicht aus Polyurethan erfolgt in der Regel in einem Arbeitsgang.

Der Auftrag der äußeren Thermoplastdeckschicht erfolgt in der Regel vor Erreichen der Endfestigkeit der Polyurethan-Hartschaumschicht.

Der Auftrag der Polyurethan-Hartschaumschicht und der äußeren Thermoplastschicht erfolgt mit Hilfe von Mischköpfen und Gießdüsen, wobei der Mischkopfvorschub entweder in definiertem Abstand der Mischköpfe parallel zur Rotationsachse erfolgt oder das Rohr in axialer Richtung unter fest positionierten Mischköpfen definiertem Vorschub bewegt wird.

Durchführung des erfindungsgemäßen Verfahrens:

Ein Rohr wird je nach Durchmesser auf einer entsprechenden Anlage mit definierter Drehzahl in Rotation versetzt. Je nach geforderter Dämmschichtdicke wird unter einem definierten Vorschub des Mischkopfes das Hartschaum bildende Reaktionsgemisch per Schlitzdüse aufgegossen. Für verschiedene Ausstoßmengen müssen verschiedene Düsengeometrien, vorzugsweise Schlitzdüsen verwendet werden. Hat der Hartschaum seine Dämmdicke erreicht, so startet im gleichen Arbeitsgang das Aufbringen der Deckschicht. Der Vorschub der beiden Mischköpfe für Hartschaum und Deckschicht kann mit gleichen oder differenzierten Geschwindigkeiten erfolgen, wenn das Rohr rotierend eingespannt ist.

Wird das rotierende Rohr in Richtung Längsachse bewegt, dann müssen die Mischköpfe im vorgegebenen Abstand fest positioniert werden.

Der Ausstoß des Reaktionsgemisches für Hartschaum und Deckschicht wird zweckmäßigerweise so eingestellt, daß sich für beide Mischköpfe gleiche Vorschubgeschwindigkeiten ergeben. Für das Gießen der Deckschicht werden ebenfalls entsprechende Düsengeometrien, vorzugsweise Schlitzdüsen, verwendet.

Die Polyolkomponente wird in der Regel bei der Verarbeitung auf einer Temperatur von 40°C, die Isocyanatkomponente in der Regel auf einer Temperatur von 30°C gehalten.

### Ausführungsbeispiele

A) Herstellung der Vernetzerkomponente f)
Carbamat 1:
In 750 g (10 m) 3-Aminopropanol-1 wird bis zur Sättigung CO₂ eingeleitet, wobei ca. 5 m aufgenommen worden sind.

| | | | |
|---|---|---|---|
| Analyse für C₇H₁₈N₂O₄ (194) ber. | C: 43,2 %, | H: 9,2 %, | N: 14,4 %; |
| gef. | C: 43,1 %, | H: 9,1 %, | N: 14,8 %; |

Viskosität: 45.000 mPa.s (25°C).
Carbamat 2:
In 610 g (10 m) Aminoethanol wird bis zur Sättigung CO₂ eingeleitet, wobei ca. 5 m aufgenommen worden sind.

| | | | |
|---|---|---|---|
| Analyse für C₅H₁₄N₂O₄(166) ber. | C: 36,1 %, | H: 9,4 %, | N: 16,8 %; |
| gef. | C: 35,9 %, | H: 8,6 %, | N: 17,0 %; |

Viskosität: 22.000 mPa.s (25°C).
Carbmat 3:
In 750 g (10 m) N-Methylethanolamin wird bis zur Sättigung CO₂ eingeleitet, wobei ca. 5 m aufgenommen worden sind.

| | | | |
|---|---|---|---|
| Analyse für C₇H₁₈N₂O₄(194) ber. | C: 43,2 %, | H: 9,2 %, | N: 14,4 %; |
| gef. | C: 43,0 %, | H: 8,8 %, | N: 14,7 %; |

das Carbamat erstarrt kristallin. Fp.: 50°C.
Carbamat 4:
In 750 g (10 m) Isopropanolamin wird bis zur Sättigung CO₂ eingeleitet, wobei fast 5 m aufgenommen werden.

| | | | |
|---|---|---|---|
| Analyse für C₇H₁₈N₂O₄(194) ber. | C: 43,2 %, | H: 9,2 %, | N: 14,4 %; |
| gef. | C: 42,9 %, | H: 8,8 %, | N: 14,9 %; |

Viskosität: 150.000 mPa.s (25°C).
Carbamat 5:
In 1.050 g (10 m) Diethanolamin wird bis zur Sättigung CO₂ eingeleitet, wobei ca. 5 m aufgenommen werden.

| | | | |
|---|---|---|---|
| Analyse für C₇H₁₈N₂O₄(254) ber. | C: 42,5 %, | H: 8,6 %, | N: 11,0 %; |
| gef. | C: 43,0 %, | H: 8,0 %, | N: 11,5 %; |

B) Vernetzerkomponente c)
- 1.: Isophorondiamin
- 2.: Bis-(3-aminopropyl)-piperazin
- 3.: 3-Aminopropylpiperazin
- 4.: Tris-(3-aminopropyl)-amin
- 5.: 1.6.1 1-Triaminoundecan
- 6.: 2-(5-Aminopentyl)-2H-azepin
- 7.: Diethylentriamin
- 8.: Triethylentetramin
- 9.: Tetraethylenpentamin
- 10.: Pentaethylenhexamin
- 11.: Tris-(2-aminopropyl)-amin
- 12.: Tetra-(3-aminopropyl)-ethylendiamin
- 13.: Bis-(3-aminopropyl)-N,N-ethylendiamin
- 14.: Bis-(3-aminopropyl)-N,N'-ethylendiamin
- 15.: Diethyl-toluylendiamin
- 16.: Hexamethylendiamin
- 17.: Tris-(3-aminopropyl)-amin
- 18.: Tris-(2-aminoethyl)-amin

C) Schaumstoffherstellung

### Beispiel 1:

| | |
|---|---|
| 45 Gew.-Teile | eines auf Sucrose gestarteten Polyethers mit Propylenoxid auf die OH-Zahl 450, Molmasse 350, gebracht |
| 45 Gew.-Teile | eines auf Sorbit/Glycerin im Verhältnis 1:1 gestarteten Polyethers mit Propylenoxid auf eine OH-Zahl von 450, Molmasse 570, gebracht |
| 5,0 Gew.-Teile | Glycerin |
| 8,0 Gew.-Teile | Cyclopentan |
| 2,0 Gew.-Teile | Silicon-Stabilisator B 8423 (Goldschmidt AG, Essen) |
| 5,8 Gew.-Teile | Desmorapid ®726 b (Bayer AG) |
| 4,5 Gew.-Teile | Vernetzer A 2 |
| 1,9 Gew.-Teile | Aminvernetzer B 9 |
| 150 Gew.Teile | Desmodur® 44 V 20 (Bayer AG; NCO-Gehalt 31,5 Gew.-%) |

Der Rohstoffaustrag erfolgt über eine 125 mm lange und 0,5 mm breite Schlitzdüsen mit einem Austrag von 5 kg/min auf ein Stahlrohr, das mit einer Geschwindigkeit von 20 m/min rotiert.

Der ausströmende Schaumstoff ist nach seinem Fließ- und Steigvermögen so geartet, daß er trotz entgegenläufiger Bewegung von Rohr und Düse jegliches Abfließen der Schaumstoffmischung und ohne Zusetzen der Düsen im Dauerlauf einen festhaftenden, von Gaseinschlüssen freien, feinzelligen Schaumstoff der Dämmdicke von 40 mm mit leicht welliger Oberfläche ergab. Im Anschluß wird eine Thermoplasthaut aus Polyethylen der Dichte 0,95 g/cm³ über einen Extruder aufgetragen. Die Haftung zwischen Schaum und Thermoplastschicht ist einwandfrei. Die Rohdichte des Schaumstoffs betrug 80 kg/m³.

Schaumstoffeigenschaften in Tabelle 1 und 2.

### Beispiel 2:

| | |
|---|---|
| 45 Gew.-Teile | eines auf Sucrose gestarteten Polyethers, der durch Propylenoxid auf eine OH-Zahl von 450 und Molmasse 350 gebracht wurde |
| 45 Gew.-Teile | eines auf Sorbit/Glycerin im Verhältnis 1:1 gestarteten Polyethers, der durch Propylenoxid auf eine OH-Zahl von 450 und eine Molmasse von 570 gebracht wurde |
| 5,0 Gew.-Teile | Glycerin |
| 8,0 Gew.-Teile | Cyclopentan |
| 2,0 Gew.-Teile | Silicon-Stabilisator B 8423 (Goldschmidt AG, Essen) |
| 5,8 Gew.-Teile | Desmorapid® 726 b (Bayer AG) |
| 6,9 Gew.-Teile | Vernetzer A 5 |
| 2,5 Gew.-Teile | Aminvernetzer B 5 |
| 155 Gew.-Teile | Desmodur® 44 V 20 (Bayer AG) |

Die Verarbeitung erfolgt gemäß Beispiel C 1. Auch hier wird ein Schaumstoff vom Erscheinungsbild eines diskontinuierlich formverschäumten Schaumstoffrohres ohne Störungen im Schaumstoffquerschnitt im Dauerlauf erhalten. Anschließend wird über einen Extruder ein Thermoplastüberzug aus Polyethylen der Dichte 0,95 g/cm³ aufgetragen.
Die Haftung zwischen Rohr, Schaum- und Deckschicht ist einwandfrei.

Schaumstoffrohdichte: 80 kg/m³
Schaumstoffeigenschaften in Tabelle 1 und 2

### Beispiel 3:

| | |
|---|---|
| 45 Gew.-Teile | eines auf Sucrose gestarteten Polyethers, der durch Propylenoxid auf eine OH-Zahl von 450 und Molmasse von 350 gebracht wurde, |
| 45 Gew.-Teile | eines auf Sorbit/Glycerin im Verhältnis 1:1 gestarteten Polyethers, der durch Propylenoxid auf eine OH-Zahl von 450 und eine Molmasse von 570 gebracht wurde, |
| 5,0 Gew.-Teile | Glycerin |
| 8,0 Gew.-Teile | Cyclopentan |
| 2,0 Gew.-Teile | Siliconstabilisator B 8423 (Goldschmidt AG, Essen) |
| 5,8 Gew.-Teile | Desmorapid®726 b (Bayer AG) |
| 6,2 Gew.-Teile | Aminvernetzer A 5 |
| 0,9 Gew.-Teile | Aminvernetzer B 11 |
| 1,0 Gew.-Teile | Aminvernetzer B 5 |
| 155 Gew.-Teile | Desmodur® 44 V 20 (Bayer AG) |

Die Verarbeitung erfolgt gemäß Beispiel C 1. Auch hier wird ein Schaumstoff ohne Störungen und Schaumstoffentweichen mit fast glatter Oberfläche im Dauerlauf erhalten. Es wird dann eine PE-Haut über Extrudertechnik aufgetragen.

Schaumstoffrohdichte 80 kg/m³
Schaumstoffeigenschaften in Tabelle 1 und 2

### Beispiel 4: (Vergleich)

| | |
|---|---|
| 45 Gew.-Teile | eines auf Sucrose gestarteten Polyethers, der durch Propylenoxid auf eine OH-Zahl von 450 und Molmasse von 350 gebracht wurde |
| 45 Gew.-Teile | eines auf Sorbit/Glycerin (1:1) gestarteten Polyethers, der durch Propylenoxid auf eine OH-Zahl von 450 und Molmasse von 570 gebracht wurde, |
| 5,0 Gew.-Teile | Glycerin |
| 8,0 Gew.-Teile | Cyclopentan |
| 0,5 Gew.-Teile | Wasser |
| 5,8 Gew.-Teile | Desmorapid®726 b (Bayer AG) |
| 3,8 Gew.-Teile | Aminvernetzer B 9 |
| 158 Gew.-Teile | Desmodur® 44 V 20 (Bayer AG) |

Die Verarbeitung erfolgt gemäß Beispiel C 1.

Zwar entspricht der entstehende Schaumstoff zunächst weitgehend dem Erscheinungsbild des Schaumstoffs gemäß Beispiel C 1, jedoch nach ca. 7 Minuten Laufzeit resultiert plötzlich eine partielle Entmischung des Rohstoffstromes. Hierdurch entsteht zunächst eine grobe Zellstruktur mit hoher Offenzelligkeit, nach weiteren 2 Minuten ist der Rohstoffaustrag nicht mehr möglich. Die Düsen sind nicht mehr funktionsfähig.
Beurteilung in Tabelle 1 und 2.

### Beispiel 5: (Vergleich)

| | |
|---|---|
| 45 Gew.-Teile | eines auf Sucrose gestarteten Polyethers, der durch Propylenoxid auf eine OH-Zahl von 450 und eine Molmasse von 350 gebracht wurde |
| 45 Gew.-Teile | eines auf Sorbit/Glycerin (1:1) gestarteten Polyethers, der durch Propylenoxid auf eine OH-Zahl von 450 und eine Molmasse von 570 gebracht wurde |
| 5,0 Gew-Teile | Glycerin |
| 8,0 Gew.-Teile | Cyclopentan |
| 5,8 Gew.-Teile | Desmorapid®726 b (Bayer AG) |
| 4,5 Gew.-Teile | Vernetzer A 2 |
| 158 Gew.-Teile | Desmodur 44 V 20 (Bayer AG) |

Die Verarbeitung erfolgt gemäß Beispiel C 1).

Das aufschäumende Polyurethangemisch tropft bereits nach einer Rotation um 90° vom Rohr ab. Weder Haftung noch Festigkeit des Schaumstoffs erfüllen die Erfordernisse des Rotationsgießens.

Weitere Beurteilung in Tabelle 1 und 2.

**Tabelle 1:**

| Schaumstoffeigenschaften | | | | |
|---|---|---|---|---|
| Schaum-Nr. | Druckfestigkeit (MPa)⁴) | Scherfestigkeit (MPa)⁴) tangential bei 23°C | Wasseraufnahme im Kochtest ⁴) (Vol.%) | Wärmeleitzahl (mW/mK) DIN 52613 |
| C 1 | 0,6 | 0,60 | 5,0 | 27 |
| C 2 | 0,65 | 0,62 | 4,0 | 27 |
| C 3 | 0,58 | 0,51 | 4,8 | 27 |
| C 4 | 0,55¹⁾ | 0,35¹⁾ | 8,0¹⁾ | 29¹⁾ |
| | 0,28²⁾ | 0,21²⁾ | 13,0²⁾ | 31 |
| C 5 | * | * | * | * |

| | | | | |
|---|---|---|---|---|
| ¹⁾ bis zu einer Laufzeit von 5 Minuten | | | | |
| ²⁾ ab einer Laufzeit von 7 Minuten bis maximal 9 Minuten | | | | |
| ⁴) Prüfungen gemäß Europäischer Norm EN 253 | | | | |
| * nicht auswertbar, da keine Rotationsbeschichtung erreicht wurde | | | | |

**Tabelle 2:**

| Schaumstoffeigenschaften | | | | |
|---|---|---|---|---|
| Schaumstoff Nr. | Haftung | Verlauf der Einzelstränge | Zellbild | Offenzelligkeit (%) |
| C 1 | sehr gut | sehr gut | sehr fein | 6 |
| C 2 | sehr gut | sehr gut | sehr fein | 8 |
| C 3 | sehr gut | sehr gut | sehr fein | 9 |
| C 4 | gut¹⁾ | schlecht | mittel¹⁾ | 12¹⁾ |
| | | | grob²⁾ | 17²⁾ |
| C 5 | keine | gut³⁾ | * | * |

| | | | | |
|---|---|---|---|---|
| ¹⁾ bis zu einer Laufzeit von 5 Minuten | | | | |
| ²⁾ ab einer Laufzeit von 7 Minuten bis maximal 9 Minuten | | | | |
| ³⁾ nach einer Drehung von 90° jedoch mit einem Abfließen verbunden | | | | |
| * nicht auswertbar, da keine Rotationsbeschichtung erreicht wurde | | | | |

Nur die erfindungsgemäßen Vernetzerkombinationen in den Beispielen C1 bis C3 erfüllen die geforderten Dauerlaufeigenschaften in Kombination mit den mechanischen Eigenschaften der Rotationsbeschichtung.

## Patentansprüche

1. Verfahren zur Isolierung von Rohren durch Auftragen eines Polyurethan-Hartschaumstoffs als Isolierschicht und gegebenenfalls einer äußeren Deckschicht nach dem Rotationsgießverfahren,
wobei der Polyurethan-Hartschaumstoff durch Umsetzung eines
a) aromatischen Polyisocyanats mit
b) einer im Mittel mindestens 3 gegenüber Isocyanaten reaktive Wasserstoffatome aufweisenden organischen Verbindung vom Molekulargewicht 92 bis 1.000 und
c) eines aliphatischen, cycloaliphatischen oder aromatischen Polyamins und/oder Polyimins vom Molekulargewicht 32 bis 1.000 als Vernetzer in Gegenwart
d) eines Treibmittels sowie gegebenenfalls in Gegenwart von
e) an sich bekannten Hilfs- und Zusatzstoffen
erhältlich ist, dadurch gekennzeichnet, daß
f) Verbindungen vom Molekulargewicht 32 bis 1.000 der allgemeinen Formel 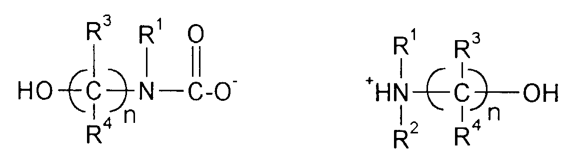 in der
n eine ganze Zahl zwischen 2 und 9, bevorzugt 2 und 3,
R¹ Wasserstoff, einen C₁-C₉-Alkylrest oder einen 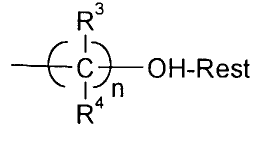
R² Wasserstoff
R³ und R⁴ Wasserstoff oder Methyl
bedeuten,
als zusätzliche Vernetzer bei der Herstellung des Polyurethan-Hartschaumstoffs mitverwendet werden.

2. Verfahren gemäß Anspruch 1, dadurch gekennzeichnet, daß als aromatisches Polyisocyanat ein Gemisch aus Diphenylmethandiisocyanaten und Polyphenyl-polyisocyanaten verwendet wird.

3. Verfahren nach Anspruch 1 und 2, dadurch gekennzeichnet, daß als Vernetzer f) die Carbamate von Ethanolamin, Diethanolamin, Isopropanolamin, Propanolamin, N-Methylethanolamin, Diisopropanolamin verwendet werden.

4. Verfahren nach Anspruch 1 bis 3, dadurch gekennzeichnet, daß als Vernetzer c) solche mit 2 bis 10 primären Aminogruppen verwendet werden.

5. Verfahren nach Anspruch 1 bis 3, dadurch gekennzeichnet, daß als Vernetzer c) solche mit 1 bis 5 primären und 1 bis 10 sekundären Aminogruppen verwendet werden.

6. Verfahren nach Anspruch 1 bis 5, dadurch gekennzeichnet, daß der Vernetzer c) tertiäre Stickstoffatome und primäre und/oder sekundäre Aminogruppen aufweist.

7. Verfahren nach Anspruch 1 bis 6, dadurch gekennzeichnet, daß als Treibmittel d) C₃-C₆-Kohlenwasserstoffe verwendet werden.

8. Verfahren nach Anspruch 1 bis 7, dadurch gekennzeichnet, daß als Treibmittel d) Pentan und/oder Cyclopentan verwendet wird.

9. Verfahren nach Anspruch 1 bis 8, dadurch gekennzeichnet, daß auf dem Polyurethan-Hartschaumstoff eine Thermoplastdeckschicht aufgebracht wird.

10. Verfahren nach Anspruch 1 bis 9, dadurch gekennzeichnet, daß es sich bei der Thermoplastdeckschicht um Polypropylen, Polyethylen, Polystyrol, Polybuten, Copolymere auf Basis Styrol/Acrylnitril/Acrylester oder Acrylnitril/Butadien/Styrol, um Polyamide, Polyester, Polyurethane oder um Polycarbonate handelt.

## Claims

1. Process for insulating pipes by applying a rigid polyurethane foam as an insulating layer and optionally an external top coating by the rotational casting process,
wherein the rigid polyurethane foam can be obtained by reacting
a) an aromatic polyisocyanate with
b) an organic compound having a molecular weight of from 92 to 1,000, containing on average at least 3 hydrogen atoms reactive towards isocyanates and
c) an aliphatic, cycloaliphatic or aromatic polyamine and/or polyimine having a molecular weight of from 32 to 1,000 as the cross linking agent in the presence of
d) a blowing agent and optionally in the presence of
e) known per se auxiliary substances and additives
characterised in that
f) compounds having molecular weights of 32 to 1,000 corresponding to the general formula 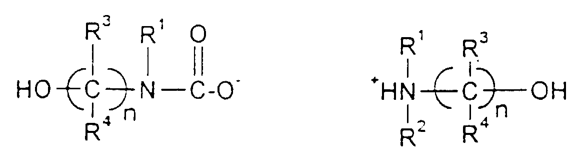
wherein
n represents an integer between 2 and 9, preferably 2 and 3,
R¹ signifies hydrogen, a C₁-C₉ alkyl group or a 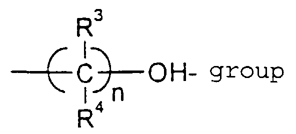
R² signifies hydrogen
R³ and R⁴ signify hydrogen or methyl
are used concomitantly as additional cross-linking agents in the production of the rigid polyurethane foam.

2. Process according to claim 1, characterised in that a mixture of diphenylmethane diisocyanates and polyphenyl polyisocyanates is used as the aromatic polyisocyanate.

3. Process according to claims 1 and 2, characterised in that the carbamates of ethanolamine, diethanolamine, isopropanolamine, propanolamine, N-methylethanolamine, diisopropanolamine are used as the cross-linking agent f).

4. Process according to claims 1 to 3, characterised in that those compounds having from 2 to 10 primary amino groups are used as the cross-linking agent c).

5. Process according to claims 1 to 3, characterised in that those compounds having from 1 to 5 primary and from 1 to 10 secondary amino groups are used as the cross-linking agent c).

6. Process according to claims 1 to 5, characterised in that the cross-linking agent c) contains tertiary nitrogen atoms and primary and/or secondary amino groups.

7. Process according to claims 1 to 6, characterised in that C₃-C₆ hydrocarbons are used as the blowing agent d).

8. Process according to claims 1 to 7, characterised in that pentane and/or cyclopentane is used as the blowing agent d).

9. Process according to claims 1 to 8, characterised in that a thermoplastic top coating is applied to the rigid polyurethane foam.

10. Process according to claims 1 to 9, characterised in that the thermoplastic top coating is polypropylene, polyethylene, polystyrene, polybutene, copolymers based on styrene/acrylonitrile/acrylic ester or acrylonitrile/butadiene/styrene, polyamides, polyesters, polyurethanes or polycarbonates.

## Revendications

1. Procédé pour l'isolation de tuyaux par application d'une mousse rigide de polyuréthane comme couche isolante et éventuellement d'une couche protectrice externe selon le procédé de coulée rotatif,
la mousse rigide de polyuréthane étant obtenue par réaction
a) d'un polyisocyanate aromatique avec
b) un composé organique présentant en moyenne au moins trois atomes d'hydrogène réactifs par rapport aux isocyanates de poids moléculaire compris entre 92 et 1 000 et
c) une polyamine et/ou une polyimine aliphatique, cycloaliphatique ou aromatique de poids moléculaire compris entre 32 et 1 000 comme agent de réticulation en présence
d) d'un agent moussant ainsi qu'éventuellement en présence
e) d'auxiliaires et d'additifs connus en eux-mêmes
caractérisé en ce que
f) des composés de poids moléculaire compris entre 32 et 1 000 de la formule générale 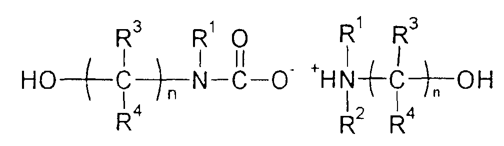
dans laquelle
n est un nombre entier compris entre 2 et 9, de préférence 2 et 3,
R¹ représente l'hydrogène, un reste alkyle en C₁-C₉ ou un reste 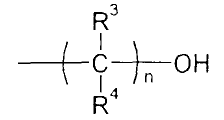
R² est l'hydrogène
R³ et R⁴ représentent l'hydrogène ou le groupe méthyle,
sont utilisés comme agents de réticulation supplémentaires pour la préparation de la mousse rigide de polyuréthane.

2. Procédé selon la revendication 1, caractérisé en ce que l'on utilise comme polyisocyanate aromatique un mélange de diisocyanates de diphénylméthane et de polyphénylpolyisocyanates.

3. Procédé selon la revendication 1 et 2, caractérisé en ce que l'on utilise comme agent de réticulation f) les carbamates d'éthanolamine, de diéthanolamine, d'isopropanolamine, de propanolamine, de N-méthyléthanolamine, de diisopropanolamine.

4. Procédé selon la revendication 1 à 3, caractérisé en ce que l'on utilise comme agent de réticulation c) ceux avec de 2 à 10 groupes amino primaires.

5. Procédé selon la revendication 1 à 3, caractérisé en ce que l'on utilise comme agent de réticulation c) ceux avec de 1 à 5 groupes amino primaires et de 1 à 10 groupes amino secondaires.

6. Procédé selon la revendication 1 à 5, caractérisé en ce que l'agent de réticulation c) présente des atomes d'azote tertiaire et des groupes amino primaires et/ou secondaires.

7. Procédé selon la revendication 1 à 6, caractérisé en ce que l'on utilise comme agent moussant d) des hydrocarbures en C₃-C₆.

8. Procédé selon la revendication 1 à 7, caractérisé en ce que l'on utilise comme agent moussant d) du pentane et/ou du cyclopentane.

9. Procédé selon la revendication 1 à 8, caractérisé en ce que l'on applique sur la mousse rigide de polyuréthane une couche protectrice thermoplastique.

10. Procédé selon la revendication 1 à 9, caractérisé en ce qu'il s'agit pour la couche protectrice thermoplastique de polypropylène, de polyéthylène, de polystyrène, de polybutène, de copolymères à base de styrène/acrylonitrile/ester acrylique ou à base d'acrylonitrile/butadiène/styrène, de polyamide, de polyester, de polyuréthane ou de polycarbonate.
